**Europäisches Patentamt**

**European Patent Office**

**Office européen des brevets**

(19)

(11) Veröffentlichungsnummer: **0 536 429 B1**

(12)

# EUROPÄISCHE PATENTSCHRIFT

(45) Veröffentlichungstag der Patentschrift:
**01.02.95 Patentblatt 95/05**

(51) Int. Cl.⁶: **H04N 17/00**

(21) Anmeldenummer: **91116712.0**

(22) Anmeldetag: **30.09.91**

(54) **Gerät zum Verarbeiten von in Zeilen aufgeteilten Videosignalen.**

(43) Veröffentlichungstag der Anmeldung:
**14.04.93 Patentblatt 93/15**

(45) Bekanntmachung des Hinweises auf die
Patenterteilung:
**01.02.95 Patentblatt 95/05**

(84) Benannte Vertragsstaaten:
**DE ES FR GB IT**

(56) Entgegenhaltungen:
**EP-A- 0 103 711**
**EP-A- 0 141 459**
**EP-A- 0 266 147**
**EP-A- 0 343 739**

(56) Entgegenhaltungen:
**US-A- 4 240 100**
**NEUES AUS DER TECHNIK. Bd. 10, Nr. 2, Juli
1990, WURZBURG DE Seite 6; 'QUALITA-
TSMESSUNG EINES VIDEOSIGNALS IN VIDE-
OTEXTEMPFÄNGERN'**

(73) Patentinhaber: **SIEMENS
AKTIENGESELLSCHAFT
Wittelsbacherplatz 2
D-80333 München (DE)**

(72) Erfinder: **Apetz, Ulrich, Dipl.-Ing.
Alpenrosenstrasse 14
W-8011 Baldham (DE)**
Erfinder: **Kramer, Ronalf, Dipl.-Ing.
Mergenthalerstrasse 6
W-8000 München 60 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gerät zum Verarbeiten von in Zeilen aufgeteilten Videosignalen mit einer digitalen Einrichtung zur Bestimmung der Qualität des Videosignals, die der Steuerung der Signalverarbeitung im Gerät in Abhängigkeit von der Qualität des Videosignals dient.

Solche Geräte sind z.B. Fernsehgeräte und Videorecorder. Diese verarbeiten Videosignale, die Videotextdaten enthalten können. Im allgemeinen sind die Videosignale verrauscht. Bei stark verrauschten Videosignalen kommt es vor, daß die Videosignalverarbeitung im Gerät nicht mehr mit ausreichender Qualität möglich ist. Die Schwellwerte für den Störabstand des Videosignals, an denen eine Verarbeitung des Videosignals im Gerät nicht mehr sinnvoll erscheint, sind für verschiedene Verarbeitungseinheiten des Gerätes unterschiedlich. Beispielsweise ist einerseits die Gewinnung der Videotextdaten aus dem Videosignal bereits bei einem geringen Rauschanteil beeinträchtigt. Andererseits soll die Darstellung von bereits gespeicherten Videotextdaten an einem Bildschirm des Gerätes noch möglich sein, wenn das Videosignal einen so niedrigen Störabstand hat, daß sich aus ihm keine Synchronimpulse mehr ableiten lassen.

In der Veröffentlichung Neues aus der Technik, Band 10, Nr. 2, July 1990, Seite 442, ist beschrieben, daß die Anzahl der Fehler, z.B. Paritätsfehler oder Hammingfehler, ein Maß für die im Videosignal enthaltenen Störungen und Verzerrungen angeben. Das Meßsignal kann in einem Videotextempfänger zur Steuerung eines Echokompensators oder zur Steuerung besserer Empfängerabstimmung verwendet werden. Die qualitätsabhängige Empfängereinstellung wird nur zur Feinkorrektur verwendet.

Der Erfindung liegt die Aufgabe zugrunde, ein eingangs genanntes Gerät anzugeben, bei dem die Qualitätsabhängigkeit möglichst genau und in einem möglichst großen Wertebereich festgestellt werden kann.

Zur Lösung dieser Aufgabe enthält das Gerät:

(a) eine digitale Horizontalsynchronisationseinrichtung, der das Videosignal zugeführt wird und durch die ein erstes Signal erzeugt wird, das den Synchronisationsgrad der Horizontalsynchronisationseinrichtung angibt,

(b) eine erste Einrichtung zur Feststellung der Anzahl der Schnittpunkte des Synchronsignalanteils des Videosignals mit einem Schwellwert während eines Zeitfensters, der das Videosignal zugeführt wird und durch die ein zweites Signal erzeugt wird,

(c) eine zweite Einrichtung zur Feststellung der in einem Videotextsignal erkannten Übertragungsfehler, der das Videosignal zugeführt und durch die ein drittes Signal erzeugt wird, und

(d) eine Steuereinrichtung zur Auswertung der Signale, der die Signale zugeführt werden und durch die Steuersignale erzeugt werden, die der Steuerung der Signalverarbeitung im Gerät in Abhängigkeit von der Qualität des Videosignals dienen.

Durch die von der Einrichtung erzeugten Qualitätssignale wird der für die Steuerung relevante Wertebereich des Signal-zu-Rausverhältnisses des Videosignals erfaßt. Dadurch wird eine Verbesserung der Verarbeitung und der Darstellung der Videotext- und Bildsignale ermöglicht.

Die Erfindung wird im folgenden anhand eines in der Zeichnung dargestellten Ausführungsbeispiels erläutert. Es zeigen

FIG 1    ein Prinzipschaltbild eines erfindungsgemäßen Gerätes,

FIG 2    ein Prinzipschaltbild einer Einrichtung zur Bestimmung der Signalqualität des Videosignals,

FIG 3    ein Diagramm des Störabstandes des digitalen Video-signals,

FIG 4    ein Prinzipschaltbild einer Horizontalsynchronisationseinrichtung,

FIG 5    eine Realisierung der ersten Einrichtung und

FIG 6    ein Prinzipschaltbild der zweiten Einrichtung.

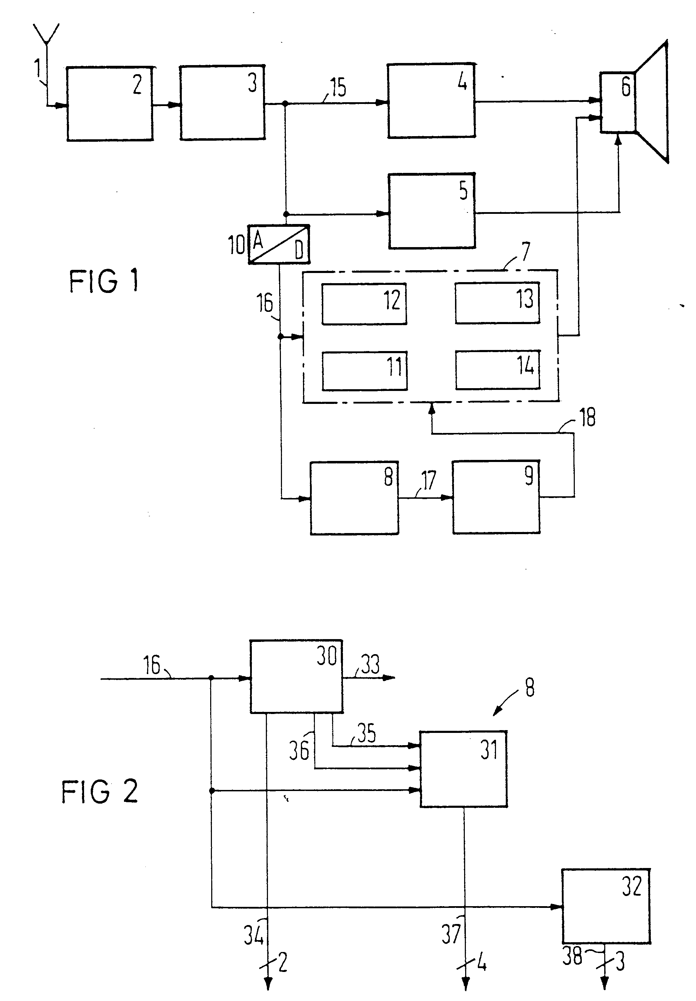

In FIG 1 ist ein Prinzipschaltbild eines erfindungsgemäßen Gerätes mit einer digitalen Einrichtung zur Bestimmung der Signalqualität des Videosignals gezeigt. Dem Fernsehgerät wird über eine Antenne 1 ein HF-Eingangssignal zugeführt und in einen Tuner 2 eingespeist. In einer nachfolgenden Stufe 3 wird ein ZF-Signal erzeugt und demoduliert. Das Ausgangssignal der Stufe 3 ist ein analoges Videosignal 15. Das Videosignal 15 wird einer Bildverarbeitungsstufe 4 zugeführt. Diese erzeugt ein RGB-Signal, das in einem Bildschirm 6 zur Darstellung weiterverarbeitet wird. Aus dem Videosignal 15 werden in einer Horizontal- und Vertikal-Ablenkeinrichtung 5 Ablenkimpulse erzeugt, die den Bildschirm 6 ansteuern. Das Fernsehgerät weist einen Videotextdecoder 7 auf, der die im Videosignal enthaltenen Videotextsignale verarbeitet. Dem Videotextdecoder 7 wird ein mittels einer Analog-Digital-Wandlereinrichtung 10 digital gewandeltes Videosignal 16 zugeführt. Er enthält eine Einrichtung 11 zur Datenakquisition. Die Videotextsignale werden in einigen Zeilen des Videosignals übertragen, die nicht für die Bildinformation verwendet werden. In der Einrichtung 11 wird erkannt, ob die betreffende Zeile Videotextdaten enthält. Die Videotextdaten werden dann vom Videosignal abgetrennt. Die in 8-bit-Worten angeordneten Videotextdaten werden ihrer Bedeutung entsprechend weiterverarbeitet. Eine Videotextseite wird in einem Speicher 14 abgelegt. Ein Zeichengenerator 13 enthält die Informationen zur

EP 0 536 429 B1

Darstellung des im Videotext verwendeten Zeichensatzes und erzeugt ein weiteres RGB-Signal, das am Bildschirm 6 zur Anzeige gebracht wird. Eine Takteinrichtung 12 erzeugt aus dem digitalen Videosignal 16 die für die zeitrichtige Verarbeitung im Videotextdecoder 7 benötigten Taktsignale.

Das digitale Videosignal 16 wird weiterhin einem Qualitätsdetektor 8 zugeführt, der Signale 17 erzeugt, mit denen der Störabstand des digitalen Videosignals 16 und somit des analogen Videosignals 15 bewertet wird. Die Auswertung der Qualitätssignale 17 wird in einer Steuerung 9 durchgeführt, die üblicherweise ein Mikrokontroller ist. Die Werte der vom Qualitätsdetektor 8 gelieferten Qualitätssignale 17 werden in Steuersignale 18 umgesetzt. Die Steuersignale 18 werden im Videotextdecoder 7 verwendet, um unterschiedliche Betriebsarten beispielsweise im Block 11 zur Datenakquisition und in der Takteinheit 12 in Abhängigkeit von der Signalqualität des digitalen Videosignals 16 einzustellen.

Beispielsweise wird die Funktion der Einrichtung 11 abgeschaltet, wenn der Störabstand des Videosignals einen ersten Schwellwert unterschreitet. Dadurch wird verhindert, daß eine im Speicher 14 bereits gespeicherte Videotextzeile von fehlerhaft empfangenen Videotextdaten überschrieben wird. Der Zeilengenerator 13 kann so gesteuert werden, daß ein Mitteilungstext für einen Benutzer am Bildschirm 6 angezeigt wird. Weiterhin ist an einem zweiten Schwellwert für den Störabstand des Videosignals eine Umschaltung von Taktsignalen, die aus dem digitalen Videosignal 16 gewonnen werden, auf Taktsignale, die durch einen freilaufenden Taktgenerator erzeugt werden, vorgesehen. Die Werte für die erste und zweite Schaltschwelle werden von der Steuerung 9 bestimmt. Da durch die Qualitätssignale 17 der relevante Wertebereich des Störabstands des Videosignals erfaßt wird, lassen sich die erste und die zweite Schaltschwelle jeweils an einen beliebigen Wert des Störabstandes des Videosignals legen und somit an die schaltungstechnische Realisierung des Gesamtgerätes anpassen. Der zur Steuerung relevante Wertebereich des Störabstandes reicht bis ungefähr 40dB. Ein Störabstand größer als 40dB führt kaum zu einer wahrnehmbaren Vebesserung der Darstellung der Bild- und Videotextinformation am Bildschirm. Ein geringerer Störabstand hingegen vermindert die Qualität der Darstellung.

In FIG 2 ist ein Prinzipschaltbild einer Einrichtung zur Bestimmung der Signalqualität des Videosignals gezeigt. Der Qualitätsdetektor enthält eine Horizontalsynchronisationseinrichtung (HPLL) 30, der das digitale Videosignal 16 zugeführt wird. In der HPLL wird ein zeilenverkoppeltes Taktsignal 33 erzeugt, das im eingeschwungenen Zustand der HPLL eine zum Synchronsignalanteil des digitalen Videosignals 16 feste Phasenbeziehungen und ein ganzzahliges Vielfaches seiner Frequenz hat. Die HPLL 30 erzeugt weiterhin ein erstes Qualitätssignal 34, das den Synchronisationsgrad der Taktsignale 33 bezüglich des Synchronsignalanteils des Videosignals 16 angibt. Das Signal 34 enthält zwei Bit. Das niedrigwertige Bit wird dann gesetzt, wenn die HPLL einrastet. Das höherwertige Bit wird dann gesetzt, wenn die HPLL vollständig synchronisiert ist. Als Entscheidungskriterium dient jeweils die Zeitdifferenz zwischen einer Flanke des Synchronsignalanteils des digitalen Videosignals 16 und einer Flanke des Taktsignals 33, wobei die Zeitdifferenz für das niedrigwertige Bit größer ist als die Zeitdifferenz für das höherwertige Bit. Je höher der Störabstand des Videosignals ist, desto schlechter ist das Taktsignal 33 zum Synchronsignalanteil des Videosignals 16 synchronisiert.

Weiterhin werden von der HPLL 30 eine Synchronabtrennschwelle 35 und ein weiteres Signal 36 erzeugt. Die Synchronabtrennschwelle 35 wird in der HPLL 30 verwendet, um den Synchronsignalanteil des digitalen Videosignals 16 bezüglich der Synchronabtrennschwelle 35 vom digitalen Videosignal 16 abzutrennen. Die Synchronabtrennschwelle 35 liegt zwischen dem Synchronwert und dem Schwarzwert des digitalen Videosignals 16. Das Signal 36 ist während einer Flanke des Synchronsignalanteils des digitalen Videosignals 16 aktiv.

Der Qualitätsdetektor 8 enthält eine erste Einrichtung 31, die ein zweites Qualitätssignal 37 erzeugt. Der ersten Einrichtung 31 werden das digitale Videosignal 16, die Synchronabtrennschwelle 35 und das Signal 36 zugeführt. Die erste Einrichtung 31 sieht Mittel vor, mit denen gezählt wird, wie oft das digitale Videosignal 16 die Synchronabtrennschwelle 35 unterschreitet. Durch das Signal 36 wird der Zählvorgang nur im Bereich der vorderen Flanke des Synchronsignalanteils des digitalen Videosignals 16 ermöglicht. Das zweite Qualitätssignal 37 gibt die Anzahl der Unterschreitungen an.

Eine zweite Einrichtung 32 erzeugt ein drittes Qualitätssignal 38.

Der zweiten Einrichtung 32 wird das digitale Videosignal 16 zugeführt. Es sind Schaltungsmittel vorgesehen, mit denen geprüft wird, mit welcher Qualität die im digitalen Videosignal 16 enthaltenen Videotextdaten im Fernsehgerät empfangen wurden. Das Videotextsignal enthält einen Takteinlauf, der aus zwei Byte besteht, die alternierend L- und H-Signale enthalten. Der Takteinlauf wird zur Synchronisation der in der zweiten Einrichtung 32 enthaltenen Schaltungsmittel auf den Datentakt der Videotextdaten verwendet. Nach dem Takteinlauf folgt ein Startcode, der der byteweisen Synchronisation dient. Anschließend folgen zwei Byte, die die Magazin- und die Reihenadresse der übertragenen Videotextzeile enthalten. Dann folgen entweder 8 Kontroll- und Adressbytes und 32 Datenbytes, wenn die übertragene Videotextzeile die Kopfzeile einer Videotextseite ist, oder 40 Datenbytes, wenn die übertragene Videotextzeile eine der Datenzeilen der Videotextseite ist. Sowohl die Magazin- und Reihenadresse als auch die Kontroll- und Adressbytes sind gemäß einem Hamming-

3

Code codiert. Dies bedeutet, daß 4 Bit eines solchen Byte die Information enthalten, während die anderen 4 Bit zur Fehlererkennung gemäß einer Hamming-Codierung erzeugt werden. Durch Auswertung der 4 Informationsbit und der 4 Bit zur Fehlererkennung nach einem Verfahren der Hamming-Decodierung läßt sich feststellen, ob kein Fehler, ein einziger Fehler oder mehr als ein Fehler jeweils in dem Byte übertragen wurden. Wenn ein einziger Fehler aufgetreten ist, läßt sich zudem das fehlerhafte Bit angeben. Im vorliegenden Ausführungsbeispiel wird das Hamming-codierte Byte der Magazinadresausgewertet. Den durch die Hamming-Decodierung festgestellten Fehlern wird dann ein Bitmuster des dritten Qualitätssignals 38 zugeordnet. Je mehr Fehler in der Magazinadresse festgestellt werden, desto niedriger ist der Störabstand des digitalen Videosignals 16.

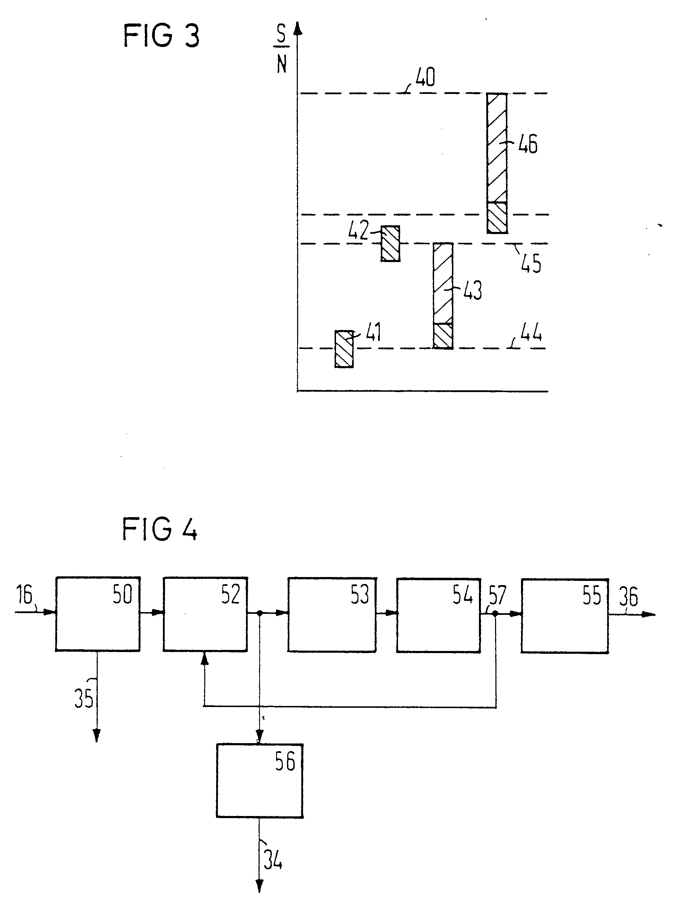

In FIG 3 ist ein Diagramm des Störabstandes des digitalen Videosignals 16 gezeigt. Darin ist dargestellt, welchem Wertebereich des Signal-zu-Rausch-Verhältnisses die Qualitätssignale entsprechen. Der Störabstand des digitalen Videosignals 16 ist aufgrund des Quantisierungsrauschens durch einen oberen Grenzwert 40 begrenzt. Wenn das digitale Videosignal 16 beispielsweise eine ortbreite von 7 Bit hat, liegt die obere Grenze 40 bei ungefähr 42dB. Ein Bereich 41 zeigt den Störabstand, bei dem das niedrigwertige Bit des ersten Qualitätssignals 34 gesetzt wird. Die Ausdehnung des Bereiches 41 längs der vertikalen Achse entspricht dem Schwankungsbereich. Ist das niedrigwertige Bit des ersten Qualitätssignals 34 gesetzt, bedeutet dies, daß der Störabstand des digitalen Videosignals 16 größer als der durch den Bereich 41 gezeigte Wert ist. Sonst liegt der Störabstand niedriger als der Bereich 41. Durch einen Bereich 42 ist die Lage der Schaltschwelle für das höherwertige Bit des ersten Qualitätssignals 34 angegeben. Ein weiterer Bereich 43 zeigt denjenigen Wertebereich des Signal-zu-Rausch-Verhältnisses des digitalen Videosignals 16, der vom zweiten Qualitätssignal 37 abgedeckt wird. Da das zweite Qualitätssignal 37 aus 4 Bit besteht und demnach Werte zwischen Null und 15 annimmt, wird durch seinen Zählbereich der Wertebereich des Signal-zu-Rausch-Verhältnisses zwischen den Grenzen 44, 45 zugeordnet. Durch einen Wert des zweiten Qualitätssignals 37 wird demnach relativ genau ein Wert des Signal-zu-Rausch-Verhältnisses zwischen den Grenzen 44, 45 bestimmt. Weiterhin kennzeichnet der Bereich 46 den Zählbereich des dritten Qualitätssignals 38. Das dritte Qualitätssignal 38 wertet die Übertragungsfehler der Videotextdaten aus. Damit ist eine Aussage über das Signal-zu-Rausch-Verhältnis in seinem oberen Wertebereich möglich.

Ein Prinzipschaltbild der Horizontalsynchronisationseinrichtung 30 ist in FIG 4 gezeigt. In einer Synchronabtrennstufe 50 wird eine Synchronabtrennschwelle 35 berechnet, die zwischen dem Schwarzwert und dem Synchronwert des digitalen Videosignals 16 liegt. Bezüglich der Synchronabtrennschwelle 35 wird der Synchronsignalanteil vom Videosignal abgetrennt. Die Phasenlage des Synchronsignalanteils wird in einem Phasendetektor 52 mit der Phasenlage eines Taktsignals 57 verglichen. Die Phasendifferenz dient einer digitalen Phasenregelung 53 als Eingangssignal, die mit dem Takteingang eines Zählers 54 verbunden ist. Der Ausgang des Zählers 54 ist das Taktsignal 57, das im eingeschwungenen Zustand des Systems eine zum Synchronsignalanteil des digitalen Videosignals 16 feste Phasenbeziehungen und ein ganzzahliges Vielfaches seiner Frequenz hat. Durch die Decodierung derjenigen Zählerzustände, die im Bereich der vorderen Flanke des Synchronsignalanteils des digitalen Videosignals 16 liegen, wird mittels der Decodiereinrichtung 55 das Steuersignal 36 erzeugt. Die vom Phasendetektor 52 errechnete Phasendifferenz wird weiterhin in einer Einrichtung 56 zur Berechnung des ersten Qualitätssignals 34 verwendet. Das niedrigwertige Bit des Signals 34 wird dann gesetzt, wenn der Einrastzustand des digitalen Phasenregelkreises erreicht ist. Die Phasendifferenz wird hierzu mit einem vorgegebenen ersten Wert verglichen. Das höherwertige Bit des Signals 34 wird dann gesetzt, wenn der digitale Phasenregelkreis 53 vollständig synchronisiert ist. Dies wird dadurch erreicht, daß die Phasendifferenz mit einem bezüglich des ersten Wertes kleineren zweiten Wert verglichen wird und diese Bedingung während mehrerer aufeinander folgender Zeilen erfüllt ist.

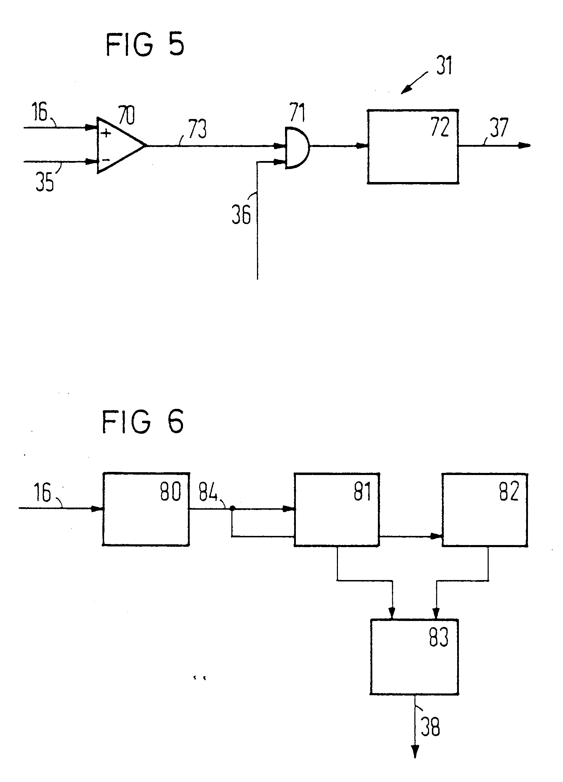

In FIG 5 ist eine Realisierung der ersten Einrichtung gezeigt. Die Synchronabtrennschwell 35 und das digitale Videosignal 16 werden an die Eingänge eines Vergleichers 70 gelegt. Wenn der Pegel des digitalen Videosignals 16 den Pegel der Synchronabtrennschwelle 35 unterschreitet, erhält das Ausgangssignal 73 des Vergleichers 70 eine Flanke. Das Signal 73 wird zusammen mit dem Signal 36, das nur während einer Flanke des Synchronsignalanteils des Videosignals aktiv ist, auf ein UND-Gatter 71 geführt. Dem UND-Gatter 71 ist ein Zähler 72 nachgeschaltet, dessen Ausgangssignal das zweite Qualitätssignal 37 ist. Durch das Signal 36 wird nur dann eine Unterschreitung des digitalen Videosignals 16 unter die Synchonabtrennschwelle 35 gezählt, wenn diese im Bereich einer Flanke des Synchronsignalanteils des digitalen Videosignals 16 auftritt.

In FIG 6 ist ein Blockschaltbild der zweiten Einrichtung 32 gezeigt. Das digitale Videosignal 16 wird an den Eingang eines Videotextslicers 80 gelegt. Im Slicer 80 werden Videotextdaten 84 vom digitalen Videosignal 16 abgetrennt. Die Videotextdaten 84 werden in einer Einrichtung 81 weiterverarbeitet, die feststellt, wie viele Fehler im Startcode einer Videotextdatenzeile enthalten sind. Es wird festgestellt, ob Null oder mindestens ein Fehler im Startcode vorliegen. Ein entsprechendes Signal wird einer Codiereinrichtung 83 zugeführt. Eine weitere Einrichtung 82 stellt fest, ob Null, ein oder mehr als ein Fehler jeweils im Hamming-Code-geschützten

EP 0 536 429 B1

Byte der Magazin-Adresse auftreten. Wenn genau ein Fehler auftritt, wird entschieden, an welcher Bitstelle er liegt. Das Ergebnis der Prüfung wird der Codiereinrichtung 83 zugeführt. Diese weist der Kombination der aufgetreteten Fehleranzahlen des Startcodes und der Magazinadresse ein bestimmtes Bitmuster des dritten Qualitätssignals 38 zu. Dabei wird unterschieden, ob genau ein Fehler im siebten Bit der Magazinadresse auftritt oder an einer anderen Bitstelle der Magazinadresse, wobei das achte Bit das höchstwertige Bit ist. Beispielsweise führt die Codiereinrichtung 83 die folgende Zuordnung aus:

```
Anzahl der Fehler in ...                    drittes Qualitätssignal
...Startcode      ...Magazinadresse
   ≥ 1               –                            x x 0
     0               1, nicht Bit 7               0 0 1
     0               1, Bit 7                      0 1 1
     0              >1                             1 0 1
     0               0                             1 1 1
```

**Patentansprüche**

1.  Gerät zum Verarbeiten von in Zeilen aufgeteilten Videosignalen mit einer digitalen Einrichtung zur Bestimmung der Qualität des Videosignals, enthaltend:
    (a) eine digitale Horizontalsynchronisationseinrichtung (30), der das Videosignal (16) zugeführt wird und durch die ein erstes Signal (34) erzeugt wird, das den Synchronisationsgrad der Horizontalsynchronisationseinrichtung (30) angibt,
    (b) eine erste Einrichtung (31) zur Feststellung der Anzahl der Schnittpunkte des Synchronsignalanteils des Videosignals mit einem Schwellwert während eines Zeitfensters, der das Videosignal (16) zugeführt wird und durch die ein zweites Signal (37) erzeugt wird,
    (c) eine zweite Einrichtung (32) zur Feststellung der in einem Videotextsignal enthaltenen Übertragungsfehler, der das Videosignal (16) zugeführt wird und durch die ein drittes Signal (38) erzeugt wird, und
    (d) eine Steuerungseinrichtung (9) zur Auswertung der Signale (34, 37, 38), der die Signale (34, 37, 38) zugeführt werden und durch die Steuersignale (18) erzeugt werden, die der Steuerung der Signalverarbeitung im Gerät in Abhängigkeit von der Qualität des Videosignals dienen.

2.  Gerät nach Anspruch 1, **dadurch gekennzeichnet**, daß das erste Signal (34) mehrere Bit umfaßt, von denen ein Bit dann gesetzt wird, wenn die Zeitdifferenz zwischen einem von der Horizontalsynchronisationseinrichtung erzeugten Taktsignal und dem Synchronsignalanteil des Videosignals jeweils einen für dieses Bit vorbestimmten Wert unterschreitet.

3.  Gerät nach Anspruch 2, **dadurch gekennzeichnet**, daß bei mindestens einem Bit die Bedingung für mehrere Zeilen erfüllt sein muß.

4.  Gerät nach Anspruch 1,
    **dadurch gekennzeichnet**, daß in der Horizontalsynchronisationseinrichtung (30) eine Synchronabtrennschwelle (35) erzeugt wird, die der ersten Einrichtung (31) zugeführt wird und die als Schwellwert dient.

5.  Gerät nach Anspruch 4, **dadurch gekennzeichnet**, daß in der Horizontalsynchronisationseinrichtung (30) ein weiteres Signal (36) erzeugt wird, welches im Bereich der vorderen Flanke des Synchronsignalanteils des Videosignals aktiv ist, der ersten Einrichtung (31) zugeführt wird und zur Festlegung des Zeitfensters dient.

6.  Gerät nach Anspruch 1, **dadurch gekennzeichnet**, daß in der zweiten Einrichtung Mittel vorgesehen sind, mit denen Videotextdatenworte vom Videosignal abgetrennt werden, und bei Datenworten, die gemäß einem Hamming-Code codierte Daten enthalten, jeweils die in einem Datenwort enthaltene Fehleranzahl bestimmt wird.

7. Gerät nach Anspruch 6, **dadurch gekennzeichnet**, daß
   (a) als Datenwort ein Byte verwendet wird, in dem die Magazinadresse einer Videotextzeile enthalten ist,
   (b) durch eine Auswertung des Hamming-Codes festgestellt wird, ob kein, ein oder mehr als ein Fehler im Byte auftreten, und
   (c) einer Kombination der Fehleranzahl im ersten Byte mit der Fehleranzahl in einem Startcode der Videozeile ein Wert des dritten Signals (38) zugeordnet wird.

## Claims

1. Apparatus for processing video signals divided into lines, comprising a digital device for determining the quality of the video signal, containing:
   (a) a digital horizontal synchronization device (30) which is supplied with the video signal (16) and by means of which a first signal (34) is generated which specifies the degree of synchronization of the horizontal synchronization device (30),
   (b) a first device (31) for determining the number of intersections of the synchronization signal component of the video signal with a threshold value during a time window, which first device is supplied with the video signal (16) and by means of which a second signal (37) is generated,
   (c) a second device (32) for determining the transmission errors contained in a teletext signal, which second device is supplied with the video signal (16) and by means of which a third signal (38) is generated, and
   (d) a control device (9) for evaluating the signals (34, 37, 38), which is supplied with the signals (34, 37, 38) and by means of which control signals (18) are generated which are used for controlling the signal processing in the apparatus in dependence on the quality of the video signal.

2. Apparatus according to Claim 1, characterized in that the first signal (34) comprises a number of bits, one bit of which is set when the time difference between a clock signal generated by the horizontal synchronization device and the synchronization signal component of the video signal in each case drops below a value which is predetermined for this bit.

3. Apparatus according to Claim 2, characterized in that the condition must be satisfied for a number of lines in the case of at least one bit.

4. Apparatus according to Claim 1, characterized in that, in the horizontal synchronization device (30), a synchronization separating threshold (35) is generated which is supplied to the first device (31) and which is used as threshold value.

5. Apparatus according to Claim 4, characterized in that, in the horizontal synchronization device (30), a further signal (36) is generated which is active in the area of the front edge of the synchronization signal component of the video signal, is supplied to the first device (31) and is used for determining the time window.

6. Apparatus according to Claim 1, characterized in that, in the second device, means are provided by means of which teletext data words are separated from the video signal and the number of errors contained in a data word is in each case determined in data words which contain data coded in accordance with a Hamming code.

7. Apparatus according to Claim 6, characterized in that
   (a) a byte containing the magazine address of a teletext line is used as data word,
   (b) it is determined by an evaluation of the Hamming code whether there is no error, one error or more than one error in the byte, and
   (c) a value of the third signal (38) is allocated to a combination of the number of errors in the first byte with the number of errors in a start code of the video line.

## Revendications

1. Appareil de traitement des signaux vidéo répartis suivant des lignes, et comportant un dispositif numérique pour déterminer la qualité du signal vidéo, contenant :

   a) un dispositif numérique de synchronisation horizontale (30), auquel le signal vidéo (16) est envoyé et qui produit un premier signal (34), qui indique le degré de synchronisation du dispositif de synchronisation horizontale (3),

   b) un premier dispositif (31), qui est destiné à déterminer le nombre des points d'intersection de la composante, constituant le signal de synchronisation, du signal vidéo avec une valeur de seuil pendant une fenêtre temporelle, et auquel le signal vidéo (16) est envoyé et qui produit un second signal (37),

   c) un second dispositif (32), qui est destiné à déterminer les erreurs de transmission contenue dans un signal de vidéotexte, auquel le signal vidéo (16) est envoyé et qui produit un troisième signal (38), et

   d) un dispositif de commande (9), qui est destiné à évaluer les signaux (34,37,38), auquel les signaux (34,37,38) sont envoyés et qui produit des signaux de commande (18) servant à commander le traitement des signaux dans l'appareil en fonction de la qualité du signal vidéo.

2. Appareil suivant la revendication 1, caractérisé par le fait que le premier signal (34) comprend plusieurs bits, dont l'un est positionné, lorsque l'intervalle de temps entre un signal de cadence produit par le dispositif de synchronisation horizontale et la composante, qui constitue le signal de synchronisation, du signal vidéo passe au-dessous d'une valeur prédéterminée pour ce bit.

3. Appareil suivant la revendication 2, caractérisé par le fait que pour au moins un bit, la condition pour plusieurs lignes doit être satisfaite.

4. Appareil suivant la revendication 1, caractérisé par le fait que dans le dispositif de synchronisation horizontale (30) est produit un seuil de séparation de synchronisation (35), qui est envoyé au premier dispositif (31) et est utilisé comme valeur de seuil.

5. Appareil suivant la revendication 4, caractérisé par le fait que dans le dispositif de synchronisation horizontale (30) est produit un autre signal (36), qui est actif dans la zone du flanc avant de la composante, constituant le signal de synchronisation, du signal vidéo, qui est envoyé au premier dispositif (31) et qui sert à fixer la fenêtre temporelle.

6. Appareil suivant la revendication 1, caractérisé par le fait que dans le second dispositif sont prévus des moyens, à l'aide desquels des mots de données de vidéotexte sont séparés du signal vidéo et, à l'aide desquels dans le cas de mots de données qui contiennent des données codées selon le code de Hamming, le nombre d'erreurs contenues dans un mot de données est déterminé.

7. Appareil suivant la revendication 6, caractérisé par le fait que

   a) comme mot de données on utilise un octet, qui contient l'adresse de magasin d'une ligne de vidéotexte,

   b) au moyen d'une évaluation du code de Hamming, on détermine si aucune erreur n'apparaît dans l'octet, si une ou plusieurs erreurs apparaissent dans l'octet, et

   c) une valeur du troisième signal (38) est associée à une combinaison du nombre d'erreurs dans le premier octet au nombre d'erreurs dans un code de démarrage de la ligne vidéo.

FIG 1

FIG 2

FIG 3

$\frac{S}{N}$

40

46

42

45

43

41

44

FIG 4

16

50

52

53

54

57

55

36

35

56

34

## FIG 5

## FIG 6